# FASCICULE DE BREVET EUROPEEN

(11) **EP 2 532 286 B1**
(45) Date de publication et mention de la délivrance du brevet: **22.07.2015**
(21) Numéro de dépôt: 12305646.7
(22) Date de dépôt: 07.06.2012
(51) Int. Cl.: A47J 27/04

(54) **Dispositif pour assurer le rechauffement et/ou la cuisson d'aliments**
Vorrichtung zur Gewährleistung des Aufwärmens und/oder des Kochens von Lebensmitteln
Device for reheating and/or cooking food

(30) Priorité: 10.06.2011 FR 1155136
(43) Date de publication de la demande: 12.12.2012
(73) Titulaire: BEABA, 75001 Paris (FR)
(72) Inventeur: Vulliermet, Jean-Paul, 34300 Adge (FR)
(74) Mandataire: Chevalier, Renaud Philippe

(56) Documents cités:
- WO-A2-2006/102214
- WO-A2-2007/144572
- FR-A1- 2 774 274
- US-B1- 6 947 664

## Description

### DOMAINE DE L'INVENTION

L'invention concerne un dispositif destiné à permettre le réchauffement et/ou la cuisson d'aliments. Plus spécifiquement, l'invention se rapporte à un appareil de ce type en vu d'assurer la cuisson d'aliments pour enfants.

### ART ANTERIEUR

Il est bien connu de procéder au moyen d'un dispositif approprié au réchauffement homogène d'aliments pour enfants avec ou sans mixage desdits aliments soit concomitant, soit subséquent, et en simplifiant en outre la phase ultérieure de lavage et de nettoyage du récipient recevant les aliments.

On a par exemple décrit dans le document FR 2 774 274 un tel dispositif. Fondamentalement, celui-ci se compose :
- d'un générateur de vapeur, destiné à produire de la vapeur pour chauffer ou cuire les aliments ;
- d'un récipient de cuisson, recevant un panier de cuisson amovible pourvu d'ouvertures traversantes, destinées à permettre le passage de la vapeur, ledit récipient étant obturé réversiblement au niveau de son extrémité supérieure au moyen d'un couvercle amovible.

Selon les enseignements de ce document :
- le couvercle amovible est muni d'une ouverture traversante, destinée à permettre la mise en communication du générateur de vapeur avec l'intérieur dudit récipient, et notamment du panier de cuisson ;
- les ouvertures traversantes du panier de cuisson sont ménagées au voisinage de sa base ;
- et le récipient est muni d'une ouverture traversante ménagée sensiblement au voisinage de l'extrémité supérieure de la paroi le définissant.

Un tel dispositif permet d'aboutir à un réchauffement et à une cuisson homogènes des aliments pour enfants, sans nécessité de phase de mixage lorsqu'en outre cela n'est pas requis.

Ce dispositif donne entière satisfaction au niveau de la cuisson homogène des aliments, mais possède quelques inconvénients au niveau pratique, que la présente invention propose de résoudre.

Un autre dispositif pour assurer le réchauffement et/ou la cuisson d'aliments est divulgué dans US 6,947,664 B1.

### DESCRIPTION DE L'INVENTION

L'un des problèmes que tente de résoudre la présente invention est la simplification de la conception du dispositif, notamment en termes de fabrication. Ainsi donc, l'invention propose de réaliser une ouverture simultanée de la cuve du générateur de vapeur et du récipient recevant le panier de cuisson amovible. Ce faisant, l'utilisateur peut accéder simultanément à la cuve et au récipient à l'aide d'une seule main. L'autre main pouvant être utilisée pour porter un enfant par exemple.

Un autre problème que propose de résoudre l'invention est celui de permettre la cuisson séparée d'ingrédients différents, tels que de la viande et des légumes par exemple.

L'objectif de la présente invention est ainsi de fournir un dispositif pour assurer le réchauffement et/ou la cuisson d'aliments qui pallie les inconvénients cités ci-dessus en présentant une utilisation avantageuse par rapport aux solutions proposées par l'art antérieur.

Pour résoudre les problèmes précités, il a été mis au point un dispositif selon la revendication 1.

De cette manière, l'accès à la cuve et au récipient peut se faire de manière simultanée à l'aide d'une seule main.

Avantageusement, le couvercle est relié de manière amovible au bras. Cela permet de pouvoir retirer le récipient tout en conservant le couvercle fixé dessus de manière amovible.

Pour permettre la communication du générateur de vapeur avec l'intérieur du récipient et notamment du panier de cuisson, le couvercle est muni d'une ouverture traversante.

De préférence, le moyen d'obturation comprend des organes permettant de le verrouiller en position d'obturation et de le déverrouiller. Cela permet, en actionnant lesdits organes d'ouvrir simultanément la cuve et le récipient.

Selon une forme de réalisation de l'invention, pour permettre la cuisson séparée d'ingrédients différents, tels que de la viande et des légumes, le dispositif comprend :
- deux générateurs de vapeur, agencés dans un même boitier dédiés à la production de vapeur ;
- deux récipients de cuisson, agencés de part et d'autre des générateurs de vapeur et en communication avec ceux-ci ;
- deux moyens d'obturation obturant simultanément et réversiblement les récipients de cuisson et/ou de réchauffement et les cuves des générateurs de vapeur correspondantes.

### BREVE DESCRIPTION DES FIGURES

L'invention sera bien comprise, et d'autres caractéristiques et avantages de celle-ci apparaîtront mieux, en référence aux dessins schématiques annexés, représentant, à titre d'exemples non limitatifs, deux formes de réalisation préférées.
La figure 1 est une vue schématique représentant le dispositif pour assurer le réchauffement et/ou la cuisson d'aliments pour enfants conforme à l'invention dans sa version double, vue de face.
La figure 2 est vue schématique éclatée du dispositif de la figure 1.
La figure 3 est une vue schématique similaire à la figure 1, mais vue de dessus.
La figure 4 est une vue schématique représentée en section selon l'axe A-A apparaissant sur la figure 3.
La figure 5 est une vue schématique représentée en coupe selon l'axe B-B apparaissant sur la figure 4.
La figure 6 est une vue schématique représentée en coupe selon l'axe C-C apparaissant sur la figure 4.
La figure 7 est une vue schématique en perspective du bras articulé, vue de dessus et de dessous.
La figure 8 est une vue schématique éclatée du bras articulé.
La figure 9 est une vue schématique en coupe selon la longueur du bras articulé.
La figure 10 est une vue schématique en perspective du dispositif de l'invention en mode solo ou unitaire.

### DESCRIPTION DETAILLEE DE L'INVENTION

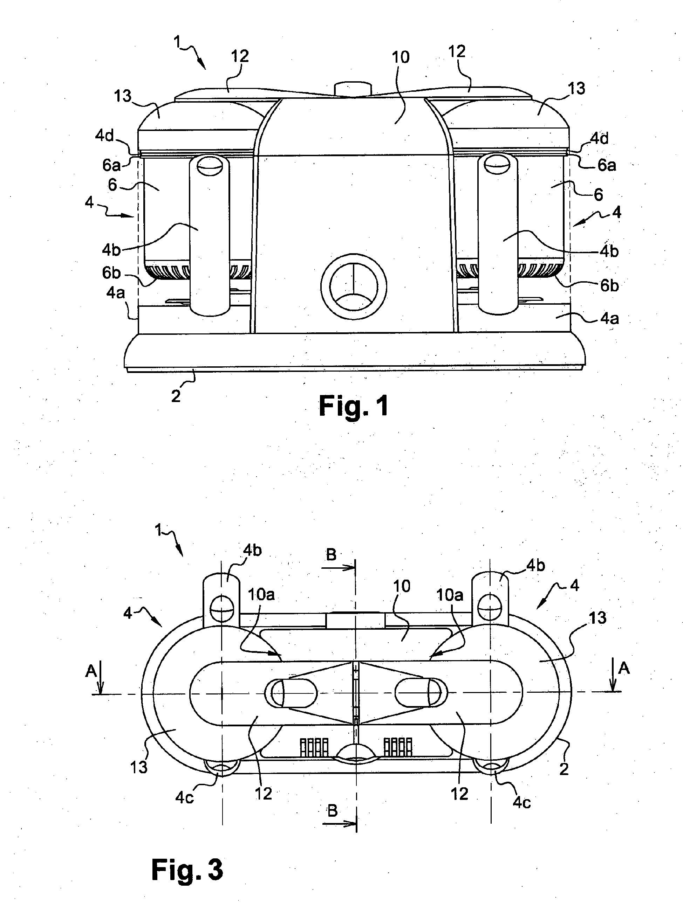

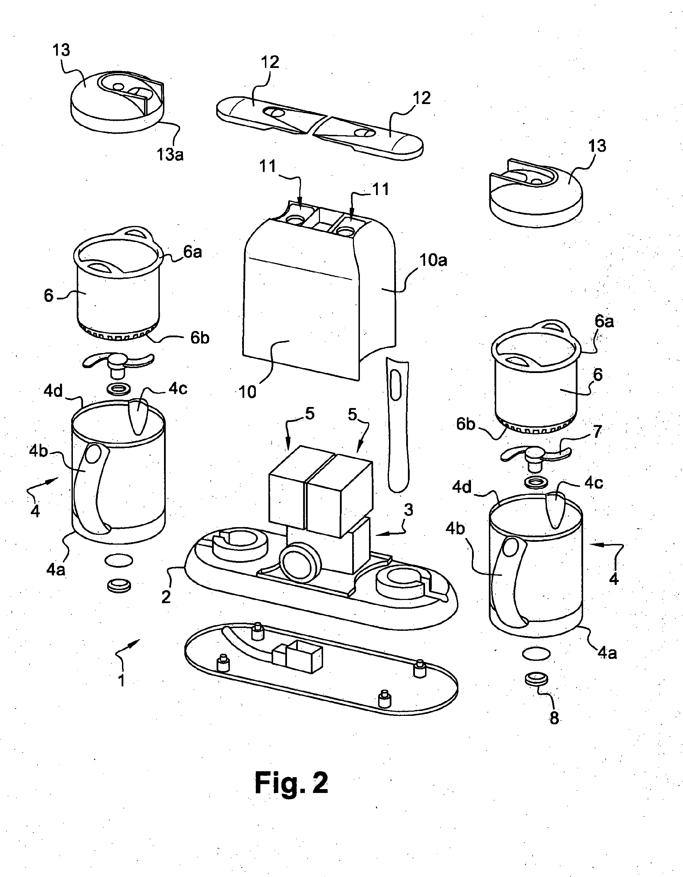

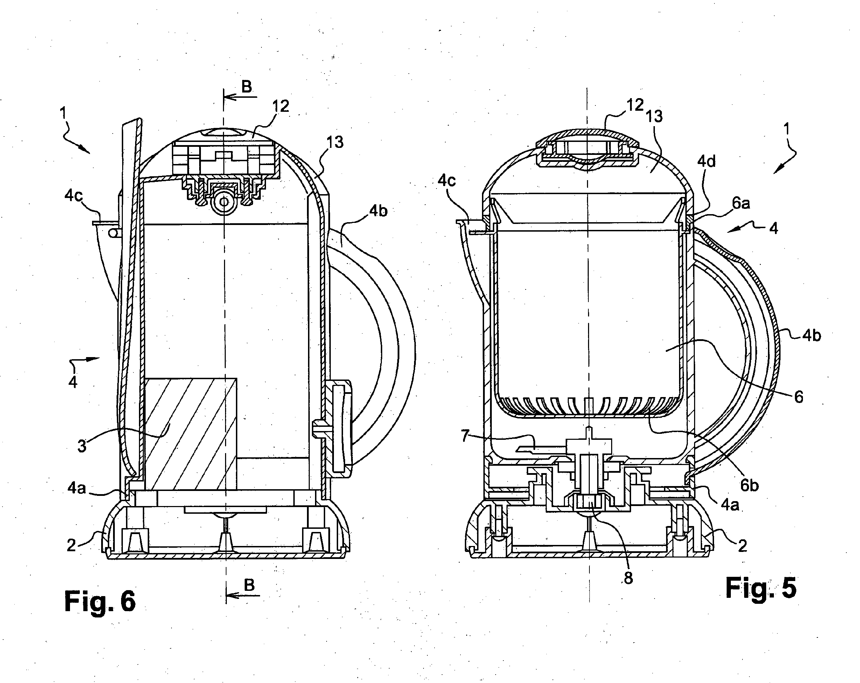

En référence aux figures 1 à 6, le dispositif (1) conforme à l'invention est représenté en mode « duo », c'est-à-dire qu'il comprend deux bols ou récipients, associés chacun à un générateur de vapeur, ainsi que celà va être décrit plus en détail ci-après.

Il comporte fondamentalement une embase (2) de forme oblongue servant de support à un boitier (10) recevant deux générateurs de vapeur (3) et à deux récipients (4), destinés chacun à recevoir un panier de cuisson amovible (6), lesdits récipients étant situés de part et d'autre du boitier (10).

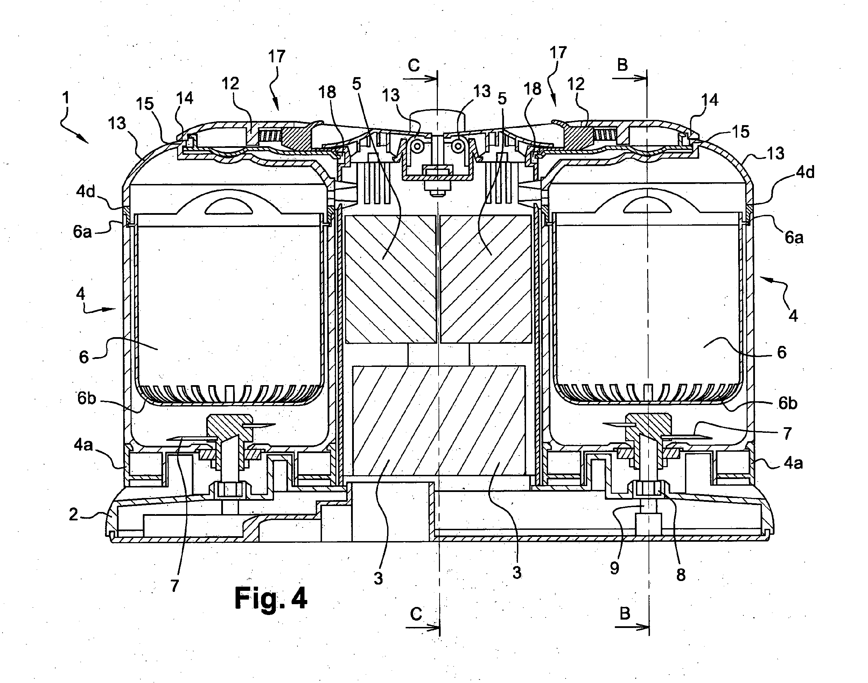

Comme on peut l'observer sur la figure 4, les deux générateurs de vapeur (3) sont agencés côte à côte sensiblement au centre de l'embase (2). Ils comprennent chacun une cuve (5), destinées à recevoir l'eau nécessaire à la production de vapeur, et une source thermique, typiquement constituée par des résistances électriques toriques (non représentées) placées sous lesdites cuves (5).

Les deux récipients (4) sont agencés de part et d'autre desdits générateurs de vapeur (3), aux extrémités de l'embase oblongue (2). Les deux récipients (4) sont identiques et sont typiquement réalisés en polysulfone transparent. Ils pourraient cependant être réalisés en copolyester ou encore en polyamide. Ils présentent une symétrie de révolution, notamment cylindrique. Ils comportent une base (4a) par le biais de laquelle ils viennent prendre appui au niveau de l'embase (2) du dispositif (1) conforme à l'invention. Ces récipients (4) comprennent également une poignée de préhension (4b) et un bec verseur (4c), diamétralement opposé à la poignée de préhension (4b).

Les récipients (4) sont destinés à recevoir un panier de cuisson amovible (6), ce dernier venant prendre appui par le biais d'une saillie supérieure périphérique et annulaire (6a) sur un épaulement (4d) ménagé à cet effet au sein de la paroi latérale interne définissant le récipient (4).

Ce panier (6) est pourvu d'un certain nombre d'ouvertures traversantes (6b), toutes ménagées au niveau de sa base. Ces ouvertures traversantes (6b) sont typiquement constituées d'ouïes s'étendant entre le fond et la base de la paroi latérale définissant ledit panier (6). Elles sont régulièrement espacées et réparties. Les ouvertures traversantes peuvent également comprendre des orifices circulaires, ménagés au niveau du fond dudit panier (6).

Le récipient (4) peut également être muni d'un couteau de mixage (7), mû en rotation par l'intermédiaire d'un écrou (8) venant engrener sur un arbre moteur (9), lui-même activé par un moteur électrique, avantageusement situé sous l'un des récipients (4).

Le boitier (10) recouvre les deux générateurs de vapeur (3). Le boitier (10) est de forme générale rectangulaire et comprend des évidements cylindrique latéraux (10a) afin d'épouser la forme des deux récipients (4). Des ouvertures (11) sont ménagées sur sa partie supérieure pour permettre l'accessibilité aux cuves (5) recevant l'eau nécessaire à la production de vapeur.

Selon l'invention, un bras articulé (12), de forme oblongue, est agencé sur la partie supérieure du boitier (10) et est destiné à obturer l'ouverture (11) donnant accès à la cuve à eau (5). Ce bras articulé (12) est relié de manière pivotante par l'une de ses extrémités au boitier (10). Ainsi l'articulation du bras (12) permet d'obturer ou de libérer l'accès à ladite cuve (5). L'autre extrémité du bras (12) est destinée à coopérer de manière amovible avec un couvercle (13).

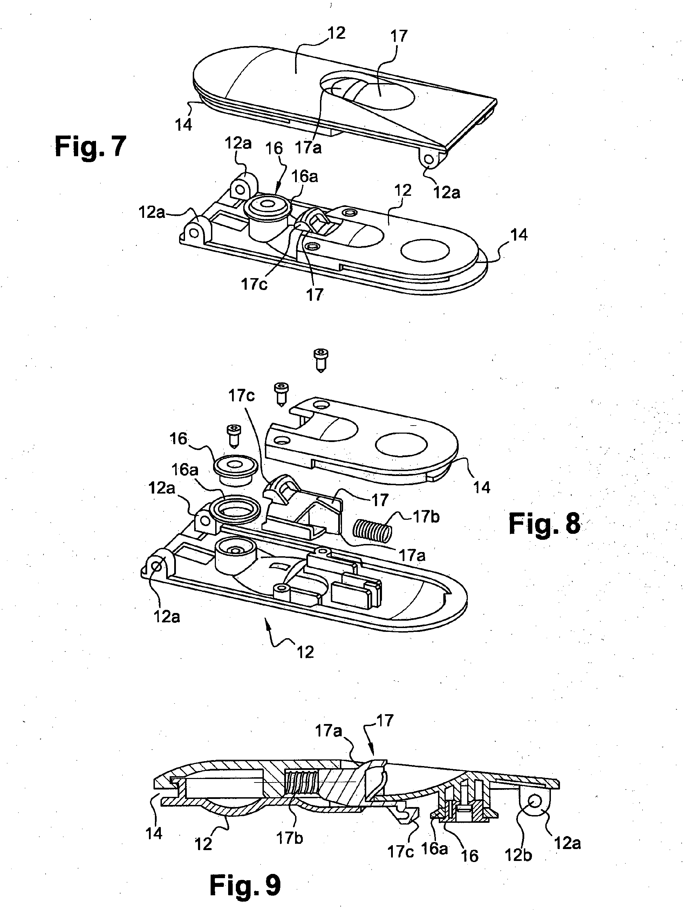

Le bras articulé (12) est représenté plus en détail sur les figures 7 à 9. Il comprend ainsi, à une première extrémité, deux flasques latéraux faisant saillie (12a) vers le bas et destinés à recevoir entre un axe (12b). L'axe étant relié au boitier, cela permet de réaliser une liaison pivot du type charnière permettant l'articulation du bras (12) sur le boitier (10).

L'autre extrémité du bras (12) comprend un agencement type fente de réception (14), destinée à recevoir un agencement complémentaire (15) agencé sur le couvercle (13) du récipient (4). Le couvercle (13) est de fait désolidarisable du bras (12).

Un organe d'obturation (16) est situé sous le bras articulé (12), et est de forme complémentaire à l'ouverture (11) d'accès à la cuve (5), et ménagée sur le boitier (10). Cet élément d'obturation (16) comprend un joint d'étanchéité (16a) et vient, lorsque le bras (12) est en position d'obturation, obturer de manière étanche ladite ouverture (11).

Des organes de verrouillage (17) sont également agencés sur le bras articulé (12). Ces organes de verrouillage (17) sont de la forme d'une gâchette (17a), accessible par le dessus du bras (12), et coopérant avec un ressort (17b). Ladite gâchette (17a) comprenant une languette (17c) faisant saillie du dessous du bras (12) et apte à venir en engagement dans une fente (18) prévue sur le boitier (10). De cette manière, lorsque la gâchette (17a) est actionnée, la languette (17c) sort de la fente (18) et le bras (12) est alors apte à passer en position de non obturation. Le ressort (17b) coopérant avec la gâchette (17a) permet de ramener celle-ci dans sa position d'origine. Et, lorsque le bras (12) est en position d'obturation, la languette (17c) est engagée dans ladite fente (18) et le verrouillage est effectué et maintenu par le ressort (17b) qui maintient la gâchette (17a), et corollairement la languette (17c) dans cette position.

Étant donné que le couvercle (13) est relié au bras articulé (12), lorsque ce bras (12) passe d'une position d'obturation à une position de non obturation, la cuve (5) et le récipient (4) sont simultanément ouverts. Corollairement, lorsque le bras (12) passe de la position de non obturation à la position obturation, le récipient est alors fermé par le couvercle (13).

Le couvercle (13) se présente sous la forme d'une portion de cylindre, complémentaire au récipient (4) et est destiné à obturer celui-ci. Le couvercle (13) est muni sur la paroi latérale définissant ledit cylindre, d'une ouverture traversante (13a) destinée, lorsque le récipient (4) est en place sur l'embase (2), à venir se positionner de manière relativement étanche en regard de la sortie d'un générateur de vapeur (3), de telle sorte à placer en communication l'intérieur du récipient (4) avec ledit générateur de vapeur (3).

Lors de l'utilisation du dispositif (1), le récipient (4) est placé au niveau du lieu qui lui est destiné, et l'ouverture (13a) ménagée au sein du couvercle (13) est positionnée en regard de la canalisation (19) émanant du générateur de vapeur (3) par simple rotation, cette rotation étant limité en angle, par une butée (non représentée) ménagée au sein dudit couvercle (13), et coopérant de manière complémentaire avec un moyen intégré dans le châssis du dispositif, de telle sorte qu'en fin de course, ladite ouverture (13a) soit correctement positionnée. Par ailleurs, lors de cette opération, le couvercle (13) exerce une certaine pression sur un joint déformable, positionné au niveau de la zone de sortie de la canalisation (19), de telle sorte à assurer une certaine étanchéité lors du transfert de la vapeur du générateur de vapeur (3) vers le récipient (4).

On conçoit tout l'intérêt de l'agencement respectif des orifices d'entrée et de sortie de la vapeur dans l'optique d'une plus grande efficacité de réchauffement et d'une plus grande homogénéité, sans pour autant altérer la simplicité de réalisation et d'utilisation d'un tel dispositif.

L'agencement du bras articulé (12) permet alors à un utilisateur d'accéder simultanément :
- à la cuve (5) pour ajouter de l'eau nécessaire à la production de vapeur,
- et au récipient (4)
et ce, à l'aide d'une seule main grâce au système de verrouillage/déverrouillage (17) simplifié dont est pourvu le bras articulé (12).

Comme cela apparaît de la description qui précède, l'utilisation du dispositif (1) de l'invention s'en trouve simplifiée. En effet, l'accès à la cuve (5) du générateur de vapeur (3) se fait simultanément avec l'accès au récipient (4).

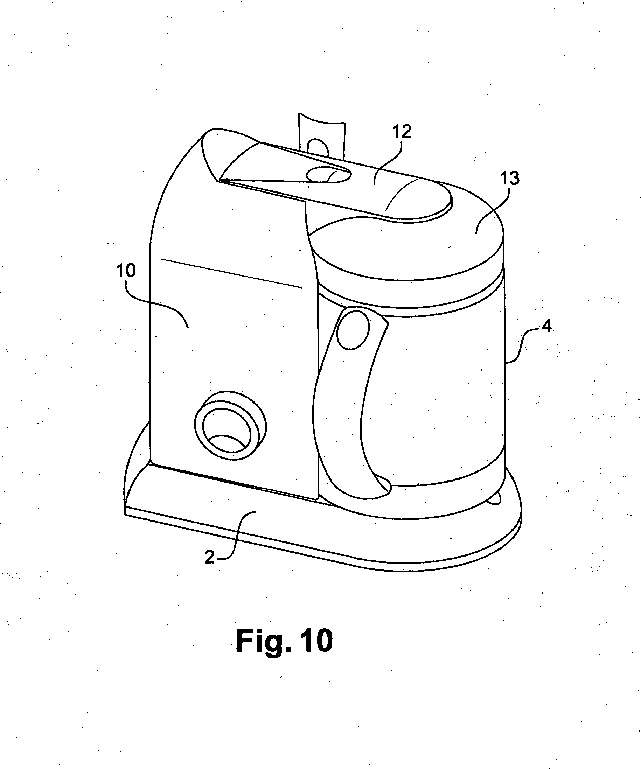

On a représenté en relation avec la figure 10 une vue du dispositif de l'invention en version «solo». En l'espèce, et contrairement à la forme de réalisation précédemment décrite, ce dispositif ne comporte qu'un récipient (4), obturé par un couvercle (13) et un bras articulé (12). Ce récipient communique, comme dans le cas précédent avec un générateur de vapeur (non représenté).

Il reçoit également un panier de cuisson.

Ce dispositif en mode « solo » fonctionne bien évidemment de manière identique à celui décrit en mode « duo ».

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Dispositif pour assurer le réchauffement et/ou la cuisson d'aliments, notamment pour enfants, comprenant :
• au moins un générateur de vapeur (3), comprenant une cuve (5) apte à recevoir de l'eau, destiné à transformer l'eau en vapeur pour chauffer ou cuire les aliments ;
• au moins un récipient (4) de cuisson et/ou de réchauffement, en communication avec ledit générateur de vapeur (3), recevant un panier de cuisson (6) amovible, apte à recevoir les aliments à réchauffer et/ou à cuire ;
• au moins un moyen d'obturation apte à obturer le récipient (4) de cuisson et/ou de réchauffement ,le moyen d'obturation obturant également, simultanément et réversiblement le récipient (4) de cuisson et/ou de réchauffement et la cuve (5) du générateur de vapeur (3), **caractérisé en ce que** le moyen d'obturation comprend un couvercle (13) fixé à un bras (12) articulé sur le bâti du dispositif (1), l'articulation du bras (12) permettant de passer d'une position d'obturation à une position de non obturation, et **en ce que**, en position d'obturation, le récipient (4) de cuisson et/ou de réchauffement est obturé par le couvercle (13), et la cuve (5) du générateur de vapeur (3) est obturée par le bras (12).

2. Dispositif (1) pour assurer le réchauffement et/ou la cuisson d'aliments selon la revendication 1, **caractérisé en ce que** le couvercle (13) est relié de manière amovible au bras (12).

3. Dispositif (1) pour assurer le réchauffement et/ou la cuisson d'aliments selon l'une des revendications 1 ou 2, **caractérisé en ce que** le couvercle (13) est muni d'une ouverture traversante (13a) permettant d'assurer la mise en communication du générateur de vapeur (3) avec l'intérieur du récipient (4) et notamment du panier de cuisson (6).

4. Dispositif (1) pour assurer le réchauffement et/ou la cuisson d'aliments selon l'une des revendications 1 à 3, **caractérisé en ce que** le moyen d'obturation comprend des organes (17) permettant de le verrouiller en position d'obturation et de le déverrouiller.

5. Dispositif (1) pour assurer le réchauffement et/ou la cuisson d'aliments selon l'une quelconque des revendications précédentes, **caractérisé en ce qu'**il comprend :
• deux générateurs de vapeur (3), agencés dans un même boitier (10) dédié à la production de vapeur ;
• deux récipients (4) de cuisson, agencés de part et d'autre des générateurs de vapeur (3) et en communication respective avec ceux-ci ;
deux moyens d'obturation obturant simultanément et réversiblement les récipients (4) de cuisson et/ou de réchauffement et les cuves (5) des générateurs de vapeur (3).

## Patentansprüche

1. Vorrichtung zum Sicherstellen des Aufwärmens und/oder des Garens von Nahrungsmitteln, insbesondere für Kinder, die Folgendes umfasst:
- mindestens einen Dampferzeuger (3), der einen Behälter (5) umfasst, der geeignet ist, um Wasser aufzunehmen, der dazu bestimmt ist, das Wasser in Dampf umzuwandeln, um die Nahrungsmittel aufzuwärmen oder zu garen,
- mindestens einen Gar- und/oder Aufwärmbehälter (4) in Kommunikation mit dem Dampferzeuger (3), der einen abnehmbaren Garkorb (6) aufnimmt, der geeignet ist, um die aufzuwärmenden und/oder zu garenden Nahrungsmittel aufzunehmen,
- mindestens ein Verschlussmittel, das geeignet ist, den Gar- und/oder Auffangbehälter (4) zu verschließen, wobei das Verschlussmittel gleichzeitig und umkehrbar auch den Gar- und/oder Auffangbehälter (4) und den Behälter (5) des Dampfgenerators (3) verschließt, **dadurch gekennzeichnet, dass** das Verschlussmittel einen Deckel (13) umfasst, der an einem Arm (12) befestigt ist, der auf dem Rahmen der Vorrichtung (1) angelenkt ist, wobei es die Anlenkung des Arms (12) erlaubt, von einer Verschlussposition zu einer unverschlossenen Position überzugehen, und dass der Gar- und/oder Auffangbehälter (4) in Verschlussposition von dem Deckel (13) verschlossen ist, und der Behälter (5) des Dampfgenerators (3) durch den Arm (12) verschlossen ist.

2. Vorrichtung (1) zum Sicherstellen des Aufwärmens und/oder des Garens von Nahrungsmitteln nach Anspruch 1, **dadurch gekennzeichnet, dass** der Deckel (13) abnehmbar mit dem Arm (12) verbunden ist.

3. Vorrichtung (1) zum Sicherstellen des Aufwärmens und/oder des Garens von Nahrungsmitteln nach einem der Ansprüche 1 oder 2, **dadurch gekennzeichnet, dass** der Deckel (13) mit einer durchgehenden Öffnung (13a) versehen ist, die es erlaubt, das Herstellen der Kommunikation des Dampfgenerators (3) mit dem Inneren des Behälters (4) und insbesondere des Garkorbs (6) sicherzustellen.

4. Vorrichtung (1) zum Sicherstellen des Erwärmens und/oder des Garens von Nahrungsmitteln nach einem der Ansprüche 1 bis 3, **dadurch gekennzeichnet, dass** das Verschlussmittel Organe (17) umfasst, die es erlauben, sie in Verschlussposition zu verriegeln und sie zu entriegeln.

5. Vorrichtung (1) zum Sicherstellen des Aufwärmens und/oder des Garens von Nahrungsmitteln nach einem der vorhergehenden Ansprüche, **dadurch gekennzeichnet, dass** sie Folgendes umfasst:
- zwei Dampferzeuger (3), die in ein und demselben Gehäuse (10), das für die Dampferzeugung bestimmt ist, eingerichtet sind,
- zwei Garbehälter (4), die zu beiden Seiten der Dampferzeuger (3) eingerichtet und jeweils mit diesen in Kommunikation sind,
wobei zwei Verschlussmittel gleichzeitig und umkehrbar die Gar- und/oder Auffangbehälter (4) und die Behälter (5) der Dampferzeuger (3) verschließen.

## Claims

1. A device for heating and/or cooking food, in particular for children, comprising:
• at least a steam generator (3), comprising a bowl (5) configured to receive water, intended to convert water into steam for heating or cooking food;
• at least a cooking and/or heating container (4), in communication with said steam generator (3), receiving a removable cooking basket (6), intended to receive the food to be heated and/or cooked;
• at least a closing means configured to close the cooking and/or heating container (4), the closing means also closing, simultaneously and reversibly the cooking and/or heating container (4) and the bowl (5) of the steam generator (13), **characterized in that** the closing means comprises a cover (13) fixed to an arm (12) hinged on the framework of the device (1), the articulation of the arm (12) allowing to pass from a closed position to a non-closed position, and **in that**, in closed position, the cooking and/or heating container (4) is closed by the cover (13), and the bowl (5) of the steam generator (3) is closed by the arm (12).

2. The device (1) for heating and/or cooking food according to claim 1, **characterized in that** the cover (13) is removably attached to the arm (12).

3. The device (1) for heating and/or cooking food according to any of claims 1 or 2, **characterized in that** the cover (13) is provided with a through opening (13a) allowing to ensure the communication of the steam generator (3) with the inside of the container (4) and in particular the cooking basket (6).

4. The device (1) for heating and/or cooking food according to any of claims 1 to 3, **characterized in that** the closing means comprises members (17) allowing to lock it in closed position and unlock it.

5. The device (1) for heating and/or cooking food according to any one of the preceding claims, **characterized in that** it comprises:
• two steam generators (3), arranged in a same casing (10) dedicated to the production of steam;
• two cooking containers (4), arranged on either side of the steam generators (3) and in respective communication with these;
two closing means simultaneously and reversibly closing the cooking and/or heating containers (4) and the bowls (5) of the steam generators (3).
